# EUROPÄISCHE PATENTSCHRIFT

(11) **EP 2 564 092 B1**
(45) Veröffentlichungstag und Bekanntmachung des Hinweises auf die Patenterteilung: **11.05.2016**
(21) Anmeldenummer: 11705579.8
(22) Anmeldetag: 28.02.2011
(51) Int. Cl.: F16J 15/32, F16C 33/72, G01P 3/44, F16C 41/00, G01P 1/02, G01D 11/24

(54) **SENSORBAUGRUPPE FÜR EIN FAHRZEUG UND VORRICHTUNG ZUR ERFASSUNG VON DREHBEWEGUNGEN EINES RADLAGERS**
SENSOR SUBASSEMBLY FOR A VEHICLE AND DEVICE FOR MEASURING ROTATIONAL MOVEMENTS OF A WHEEL BEARING
MODULE DE DÉTECTION POUR UN VÉHICULE ET DISPOSITIF PERMETTANT DE DÉTECTER LES MOUVEMENTS DE ROTATION D'UN PALIER DE ROUE

(30) Priorität: 27.04.2010 DE 102010028232
(43) Veröffentlichungstag der Anmeldung: 06.03.2013
(73) Patentinhaber: Robert Bosch GmbH, 70442 Stuttgart (DE)
(72) Erfinder: NINOMIYA, Kenichi, 71636 Ludwigsburg (DE); WAIBLER, Matthias, 73630 Remshalden-Hebsack (DE); HEGAZI, Anwar, 99192 Frienstedt (DE); FINK, Andreas, 74189 Weinsberg (DE); SCHEER, Mirko, 74369 Loechgau (DE)
(86) Internationale Anmeldenummer: PCT/EP2011/052892
(87) Internationale Veröffentlichungsnummer: WO 2011/134698

(56) Entgegenhaltungen:
- DE-A1- 4 213 979
- DE-U1-202005 005 260
- JP-A- 2009 133 812

## Beschreibung

### Stand der Technik

Die Erfindung geht aus von einer Sensorbaugruppe für ein Fahrzeug nach der Gattung des unabhängigen Patentanspruchs 1 und von einer Vorrichtung zur Erfassung von Drehbewegungen eines Radlagers für ein Fahrzeug nach der Gattung des abhängigen Patentanspruchs 6.

Im Stand der Technik werden Drehzahlfühler mit integrierter Lagerkappe zum Erfassen der Raddrehzahl und mediendichtem Verschließen des Radlagers aktuell als Metallkappe oder als Kunststoffkappe mit integriertem Metallring und Sensoreinheit verwendet. Die Abdichtung der Lagerschnittstelle und des Lagers erfolgt bei den Metallkappen mittels Kraftschluss, d.h. durch einen Presssitz, in Verbindung mit einer organischen Beschichtung, welche Mikroleckagepfade im Pressverbund ausgleicht. Die Beschichtung erfolgt in der Regel durch eine kathodische Tauchlackierung (KTL).

Kunststoffkappen werden aktuell so aufgebaut, dass ein außen angebrachtes und axial verpresstes Dichtelement, wie beispielsweise eine O-Ringdichtung oder eine angespritzte Dichtung aus Silikon o.ä., das Radlager gegen Medien abdichtet und gleichzeitig durch seine Elastizität die unterschiedlichen Wärmeausdehnungskoeffizienten der verschiedenen Werkstoffe, insbesondere bei der Verwendung von Kunststoffen und Metallen, kompensiert.

Sowohl in der Offenlegungsschrift DE 10 2005 015 261 A1 als auch in den Patentschriften US 6,218,827 B1 und US 5,814,984 wird jeweils eine Vorrichtung zur Messung von Drehbewegungen eines Radlagers, insbesondere des Radlagers eines Kraftfahrzeugs, beschrieben. Die beschriebene Vorrichtung umfasst einen an einem rotierenden Teil des Radlagers angeordneten Signalgeber und eine ortsfeste Sensorbaugruppe mit einem Haltering und einem kappenförmigen Kunststoffteil als Abdeckung für das Radlager. Hierbei erfolgt die Befestigung der Sensorbaugruppe und die Abdichtung des Radlagers dadurch, dass das kappenförmige Kunststoffteil und der Haltering unter Einführung einer Dichtung mit dem ortsfesten Teil des Radlagers verpresst werden.

In der Gebrauchsmusterschrift DE 20 2005 005 260 U1 wird eine Vorrichtung zur Messung von Drehbewegungen eines Radlagers beschrieben. Die beschriebene Vorrichtung umfasst eine ortsfeste Sensorbaugruppe, welche in einem kappenförmigen Kunststoffteil angeordnet ist, welches von einem Haltering getragen ist und diesen an einem Ende abschließt. Zwischen dem kappenförmigen Kunststoffteil und dem Haltering ist in einem Dichtbereich zur Abdichtung eines ersten und eines zweiten Leckagepfads ein elastisches Dicht- und Ausgleichselement axial zwischen einem Vorsprung eines ortsfesten Teils des Radlagers und einer Kunststoffumspritzung einer Abkröpfung am Haltering eingepresst, so dass das kappenförmige Kunststoffteil in Verbindung mit dem Dicht- und Ausgleichselement den Haltering an einem Ende dicht abschließt. Hierbei ist der erste Dichtbereich als nach unten offene Aussparung ausgeführt, welche nach dem Einpressen des Halterings in den Vorsprung des ortsfesten Teils des Radlagers geschlossen wird und das Dicht- und Ausgleichselement abkapselt.

In der JP 2009 133812 A werden eine Sensorbaugruppe zur Messung von Drehbewegungen eines Radlagers und ein Verfahren zur Herstellung einer solchen Sensorbaugruppe beschrieben. Die beschriebene Sensorbaugruppe umfasst einen ortsfesten Sensor, welcher in einem kappenförmigen Kunststoffteil angeordnet ist, welches von einem metallischen Deckel getragen ist und diesen an einem Ende abschließt. Zwischen dem kappenförmigen Kunststoffteil und dem Metalldeckel ist in einem Dichtbereich zur Abdichtung eines ersten Leckagepfads ein als O-Ring ausgeführtes elastisches Dicht- und Ausgleichselement angeordnet. Zu diesem Zweck ist der O-Ring in einem im kappenförmigen Kunststoffteil angeordneten O-Ring-Halter gehalten, der eine U-förmigen Querschnitt aufweist, dessen Seite zum Bodenplattenbereich des Metalldeckels offen ist und als Ganzes zu einem Ring ausgebildet ist. Ein umgekanteter Ansetzwandbereich des Metalldeckels ist in eine Haltenut des O-Ring-Halters eingefügt. In diesem Zustand wird der O-Ring elastisch über den gesamten Umfang zwischen einer Bodenfläche der Haltenut und dem Bodenplattenbereich des Metalldeckels axial zusammengepresst und abgekapselt.

Bei Sensorbaugruppen mit Kunststoffkappe ist gemäß oben beschriebenem Stand der Technik zu beachten, dass das Ausgleichs- und Dichtelement im Falle der axialen Verpressung zwei Leckagepfade gleichzeitig abdichten muss. Dies betrifft einen ersten Leckagepfad entlang des integrierten Halterings in die Kunststoffkappe und somit auf indirektem Weg in das Radlager und einen zweiten Leckagepfad entlang des integrierten Halterings direkt in das Lager. Hierbei ist für unterschiedliche Lagereinführschrägen das Dichtkonzept aufgrund der axialen Verpressung jeweils neu auszulegen, um die Dichtheit durch normgerechte Verpressung des Dichtelements zu gewährleisten, was einen Nachteil der bekannten Lösungen darstellt. Durch die Anpassung der Sensorkapselung an das Radlager, muss weiterhin die oben genannte Schnittstelle für das Ausgleichs- und Dichtelement je nach Radlager ebenfalls neu ausgelegt und bewertet bzw. erprobt werden.

In der Offenlegungsschrift DE 42 13 979 A1 wird eine Vorrichtung zur Messung von Drehbewegungen beschrieben. Die beschriebene Vorrichtung umfasst einen steckbaren Sensor, welcher in einer Halterung sitzt, welche in eine Fettkappe eines Radlagers eingefügt ist oder als ein Bestandteil der Fettkappe ausgebildet ist. In der Halterung wird der Sensor mit Hilfe einer Rastnase, welche in eine entsprechende Aussparung der hülsenförmigen Halterung eingreift, in einer vorgegebenen Winkellage gehaltert. An einem ersten abgekapselten Dichtbereich ist der Sensor gegen die Halterung abgedichtet, die wiederum an einem im Inneren des Radlagers angeordneten zweiten Dichtbereich gegen die Fettkappe abgedichtet ist, welche an einem dritten Dichtbereich durch Einpressen gegen einen feststehenden Teil einer Radlageraußenrings abgedichtet ist.

### Offenbarung der Erfindung

Die erfindungsgemäße Sensorbaugruppe für ein Fahrzeug mit den Merkmalen des unabhängigen Patentanspruchs 1 hat demgegenüber den Vorteil, dass zwischen einem kappenförmigen Kunststoffteil und einer Haltebuchse in einem ersten Dichtbereich zur Abdichtung eines ersten Leckagepfads ein elastisches Dicht- und Ausgleichselement eingepresst ist, so dass das kappenförmige Kunststoffteil in Verbindung mit dem Dicht- und Ausgleichselement die Haltebuchse an einem Ende dicht abschließt. Hierbei bilden das kappenförmige Kunststoffteil und die Haltebuchse einen Verbund, wobei mindestens eine Sensoreinheit im kappenförmigen Kunststoffteil angeordnet und das kappenförmige Kunststoffteil von der Haltebuchse getragen ist.

Die erfindungsgemäße Vorrichtung zur Erfassung von Drehbewegungen eines Radlagers für ein Fahrzeug mit den Merkmalen des unabhängigen Patentanspruchs 1 hat demgegenüber den Vorteil, dass durch Verwendung der erfindungsgemäßen Sensorbaugruppe der erste Leckagepfad zwischen dem kappenförmigen Kunststoffteil und der Haltebuchse in einem ersten Dichtbereich durch ein eingepresstes elastisches Dicht- und Ausgleichselement abgedichtet ist, so dass das kappenförmige Kunststoffteil in Verbindung mit dem Dicht- und Ausgleichselement die Haltebuchse an einem Ende dicht abschließt. Die erfindungsgemäße Vorrichtung zur Erfassung von Drehbewegungen eines Radlagers für ein Fahrzeug umfasst mindestens einen Signalgeber an einem rotierenden Teil des Radlagers und eine ortsfeste Sensorbaugruppe mit mindestens einer Sensoreinheit, welche im kappenförmigen Kunststoffteil angeordnet ist, wobei das kappenförmige Kunststoffteil von der Haltebuchse getragen ist und das Radlager abdeckt.

Erfindungsgemäß ist das Dicht- und Ausgleichselement so in den ersten Dichtbereich eingeführt, dass das Dicht- und Ausgleichselement zwischen einer ersten Dichtfläche des kappenförmigen Kunststoffteils und einer zweiten Dichtfläche der Haltebuchse radial verpresst ist. Durch die Verpressung des Dicht- und Ausgleichselements in radialer Richtung kann der Einfluss der materialbedingten unterschiedlichen thermischen Ausdehnungen reduziert werden.

Ausführungsformen der vorliegenden Erfindung umfassen jeweils mindestens ein innen im Verbund aus kappenförmigen Kunststoffteil und Haltebuchse liegendes Dicht- und Ausgleichselement, welches durch seine Elastizität die Ausdehnungsunterschiede zwischen Metall und Kunststoff kompensiert und auch gleichzeitig die Dichtfunktion zwischen der Haltebuchse aus Metall und dem kappenförmigen Kunststoffteil sicherstellt. Dadurch wird in vorteilhafter Weise eine Trennung des ersten Leckagepfads zwischen Haltebuchse und kappenförmigen Kunststoffteil und des zweiten Leckagepfads zwischen Haltebuchse und Radlager erreicht. Die Abdichtung zwischen Radlager und Haltebuchse erfolgt wie bei der Verwendung einer Metallkappe mittels eines Pressverbunds. Zur Verbesserung der Dichtwirkung kann die Haltebuchse zumindest im Bereich einer dritten Dichtfläche eines zweiten Dichtbereichs eine zusätzliche Beschichtung aufweisen.

In vorteilhafter Weise ermöglichen Ausführungsformen der vorliegenden Erfindung einen einfachen Aufbau der Sensorbaugruppe, wobei hauptsächlich Standardkomponenten verwendet werden können, so dass die Herstellungs- und Materialkosten der erfindungsgemäßen Sensorbaugruppe bzw. einer Vorrichtung zur Erfassung von Drehbewegungen eines Radlagers für ein Fahrzeug mit einer solchen Sensorbaugruppe in vorteilhafter Weise reduziert werden können. Der erste Dichtbereich zur Aufnahme des Dicht- und Ausgleichselements kann beispielsweise beim Umspritzen der Haltebuchse mit im Werkzeug abgebildet und daher sehr genau dargestellt werden. Die Position des Dicht- und Ausgleichselements im beispielsweise als Aussparung ausgeführten ersten Dichtbereich ist aufgrund der radialen Abdichtung nicht relevant und muss somit auch nicht aufwendig während der Fertigung überwacht werden. Entscheidend ist nur die ausreichende Verpressung und Gewährleistung, dass das Dicht- und Ausgleichselement im ersten Dichtbereich angeordnet ist, was durch ein zusätzliches Halteelement oder eine selbsthaltende Ausführung des Dicht- und Ausgleichselements sichergestellt werden kann. Dadurch kann das Dicht- und Ausgleichselement beim Transport nicht mehr verloren gehen bzw. vor der Montage im Radlager nicht mehr beschädigt werden.

Zudem wird bei Ausführungsformen der Erfindung der Anpressdruck des Dichtund Ausgleichselements in vorteilhafter Weise nicht bei der Montage der Sensorbaugruppe im Radlager eingestellt, was sehr ungenau sein kann, sondern kann beim eigentlichen Aufbau der Sensorbaugruppe fein justiert werden. Die optimale Verpressung des Dicht- und Ausgleichselements ist somit unabhängig von der Montage der Sensorbaugruppe im Radlager. Durch Ausführungsformen der Erfindung ist die Auslegung des Dicht- und Ausgleichselements nicht mehr abhängig von einer Einführfase des Radlagers bzw. vom Lagerhersteller und kann in vorteilhafter Weise unabhängig von der Ausführung des korrespondierenden Radlagers auf verschiedenen Durchmesser, Signalgeber usw. des Radlagers übertragen werden. Dies ermöglicht in vorteilhafter Weise eine einmalige Auslegung und Validierung des Dicht- und Ausgleichselements sowie dessen Schnittstelle, d.h. des ersten Dichtbereichs.

Durch die in den abhängigen Ansprüchen aufgeführten Maßnahmen und Weiterbildungen sind vorteilhafte Verbesserungen der im unabhängigen Patentanspruch 1 angegebenen Sensorbaugruppe für ein Fahrzeug und der im abhängigen Patentanspruch 6 angegebenen Vorrichtung zur Erfassung von Drehbewegungen eines Radlagers für ein Fahrzeug möglich.

In vorteilhafter Ausgestaltung der erfindungsgemäßen Sensorbaugruppe weist die Haltebuchse einen ersten Teil, dessen Geometrie unabhängig vom jeweiligen Einbauort ist, und einen zweiten Teil auf, dessen Geometrie an den jeweiligen Einbauort angepasst ist. Das bedeutet, dass die Haltebuchse an einem Ende eine vorgegeben Geometrie aufweist, welche für nahezu alle Sensorbaugruppen unabhängig von der Ausführungsform des korrespondierenden Einbauortes bzw. Radlagers gleich ist, wobei die Haltebuchse am ersten Teil mit dem kappenförmigen Kunststoffteil verbunden ist. Durch die variable Geometrie des zweiten Teils der Haltebuchse, kann die Haltebuchse und damit die Sensorbaugruppe optimal an die Einpressfläche des Radlagers angepasst werden, so dass in vorteilhafter Weise eine Modularität erreicht werden kann, welche auch bei unterschiedlicher Radlagergrößen, Radlagertypen, gleich ausgeführte Schnittstellen für das Dicht- und Ausgleichselement ermöglichen. Dadurch kann der Aufwand für Werkzeuge zur Sensorkapselung, d.h. zur Umspritzung und/oder Positionierung der Sensoreinheit, und zur Herstellung der Haltebuchse bei verschiedenen Radlagertypen mit einer Variation von Durchmesser, Höhe, Sensorposition, Einführfase in vorteilhafter Weise reduziert werden. Die Haltebuchse kann beispielsweise als mehrstufiges Tiefziehteil hergestellt werden.

In weiterer vorteilhafter Ausgestaltung der erfindungsgemäßen Sensorbaugruppe ist die Haltebuchse zumindest im Bereich einer dritten Dichtfläche mit einer KTL-Schicht (CEF-Schicht) beschichtet, welche eine Dicke im Bereich von ungefähr 20 bis 30µm aufweist. Dadurch kann die Dichtwirkung an einem zweiten Dichtbereich verbessert werden, an welchem die Haltebuchse mit der dritten Dichtfläche beispielsweise in eine vierte Dichtfläche eines ortsfesten Teils eines Radlagers eingepresst werden kann.

In weiterer vorteilhafter Ausgestaltung der erfindungsgemäßen Sensorbaugruppe ist das kappenförmige Kunststoffteil unter Ausbildung des ersten Dichtbereichs zumindest teilweise auf den ersten Teil der Haltebuchse aufgespritzt. Dadurch ist es auf besonders einfache Weise möglich, die Sensoreinheit in das kappenförmige Kunststoffteil zu integrieren. Zu Erhöhung der mechanischen Festigkeit ist das kappenförmigen Kunststoffteil zweckmäßigerweise stufenförmig ausgebildet.

Dies gilt auch für die Haltebuchse. Als Material zur Herstellung des kappenförmigen Kunststoffteils eignet sich vorzugsweise Polyamid. Die Haltebuchse wird vorzugsweise aus Stahl gefertigt.

In der erfindungsgemäßen Sensorbaugruppe ist das Dicht- und Ausgleichselement von einem Halteelement im ersten Dichtbereich gehalten. Das Halteelement kann beispielweise als zusätzlicher Haltering in den ersten Dichtbereich eingepresst oder als überstehende Kante an die Haltebuchse angeformt werden, um die Position des Dicht- und Ausgleichselements im vorgesehenen ersten Dichtbereich zu sichern. Alternativ wäre eine Ausführung der Dichtgeometrie denkbar, beim dem ein selbst-fixierendes Dicht- und Ausgleichselement, wie beispielsweise eine Lamellendichtung, innen im ersten Dichtbereich liegend die oben beschriebene Dicht- und Ausgleichsfunktion übernimmt. Das Dicht- und Ausgleichselement kann beispielsweise als O-Ringdichtung oder D-Ringdichtung aus HNBR-Material ausgeführt werden. Durch die Ausführung als D-Ringdichtung kann in vorteilhafter Weise das Risiko einer Verdrehung des Dicht- und Ausgleichselements reduziert werden.

In vorteilhafter Ausgestaltung der erfindungsgemäßen Vorrichtung ist die Haltebuchse an einem zweiten Dichtbereich zur Abdichtung des zweiten Leckagepfads über die beschichtete dritte Dichtfläche mit einer vierten Dichtfläche am ortsfesten Teil des Radlagers verpresst. Da hier eine Metall-Metallverbindung zum Einsatz kommt, wird kein elastisches Ausgleichselement benötigt, da selbst bei verschiedenen Metallen keine wesentlichen Temperaturgangunterschiede vorliegen.

Ausführungsbeispiele der Erfindung sind in den Zeichnungen dargestellt und werden in der nachfolgenden Beschreibung näher erläutert.

### Kurze Beschreibung der Zeichnungen

Fig. 1 zeigt eine schematische Perspektivdarstellung eines Ausführungsbeispiels einer erfindungsgemäßen Vorrichtung zur Erfassung von Drehbewegungen eines Radlagers für ein Fahrzeug mit einem ersten Ausführungsbeispiel einer erfindungsgemäßen Sensorbaugruppe vor dem Einpressen einer Haltebuchse der Sensorbaugruppe in einen stationären Teil des Radlagers.
Fig. 2 zeigt eine schematische perspektivische Schnittdarstellung eines Ausschnitts des Ausführungsbeispiels der erfindungsgemäßen Vorrichtung zur Erfassung von Drehbewegungen eines Radlagers für ein Fahrzeug aus Fig. 1 nach dem Einpressen der Haltebuchse der Sensorbaugruppe in den stationären Teil des Radlagers.
Fig. 3 zeigt eine schematische perspektivische Schnittdarstellung eines weiteren Ausführungsbeispiels einer erfindungsgemäßen Vorrichtung zur Erfassung von Drehbewegungen eines Radlagers für ein Fahrzeug mit einem zweiten Ausführungsbeispiel einer erfindungsgemäßen Sensorbaugruppe nach dem Einpressen der Haltebuchse der Sensorbaugruppe in den stationären Teil des Radlagers.
Fig. 4 zeigt eine Detaildarstellung eines ersten Dichtbereichs der erfindungsgemäßen Vorrichtung zur Erfassung von Drehbewegungen eines Radlagers für ein Fahrzeug aus Fig. 3.
Fig. 5 zeigt eine Detaildarstellung eines zweiten Dichtbereichs der erfindungsgemäßen Vorrichtung zur Erfassung von Drehbewegungen eines Radlagers für ein Fahrzeug aus Fig. 3.
Fig. 6 zeigt eine schematische perspektivische Schnittdarstellung eines dritten Ausführungsbeispiels einer erfindungsgemäßen Sensorbaugruppe für ein Fahrzeug.
Fig. 7 zeigt eine Detaildarstellung eines ersten Dichtbereichs der erfindungsgemäßen Sensorbaugruppe aus Fig. 6.
Fig. 8 zeigt eine Detaildarstellung eines Halteelements für die erfindungsgemäße Sensorbaugruppe aus Fig. 6.
Fig. 9 zeigt eine Schnittdarstellung einer Haltebuchse für die erfindungsgemäße Sensorbaugruppe aus Fig. 6.

### Ausführungsformen der Erfindung

Im Stand der Technik werden Drehzahlfühler mit integrierter Lagerkappe zum Erfassen der Raddrehzahl und mediendichtem Verschließen des Radlagers aktuell als Metallkappe oder als Kunststoffkappe mit integriertem Metallring und Sensoreinheit verwendet. Kunststoffkappen werden aktuell so aufgebaut, dass ein außen angebrachtes und axial verpresstes Dichtelement, wie beispielsweise eine O-Ring-Dichtung oder eine angespritzte Dichtung aus Silikon o.ä., das Radlager gegen Medien abdichtet und gleichzeitig durch seine Elastizität die unterschiedlichen Wärmeausdehnungskoeffizienten der verschiedenen Werkstoffe, insbesondere bei Kunststoffen und Metallen, kompensiert.

Ein großer Vorteil von Kunststoffkappen liegt bei einem deutlich reduzierten Bauteilgewicht, welches gegenüber Metallkappen um bis zu 50% reduziert werden kann. Praktisch alle Kunststoffkappen sind in einem Verbund aus Kunststoff- und Metallteilen so aufgebaut, dass für kraftschlüssige Verbindungen zum Radlager Metallringe zum Einsatz kommen, die eigentliche Sensoreinheit aber mit Kunststoff verkapselt ist. Problematisch gestalten sich bei der axialen Abdichtung der unterschiedliche Temperaturgang zwischen dem Kunststoffteil und dem Radlager bzw. dem Metallring und die hohen Anforderungen an Radlager und Sensorbaugruppe im Bereich der Verpressung des Dichtelements bezüglich Reinheit und Maßhaltigkeit. Ein weiterer Nachteil von bekannten Kunststoffkappen liegt in der geringen Modularität der Sensorkapselung, welche je nach Größe des Radlagers und Sensorposition neu ausgelegt und gestaltet werden muss bzw. für jeden Radlagerdurchmesser ein neues Spritzwerkzeug zur Folge hat.

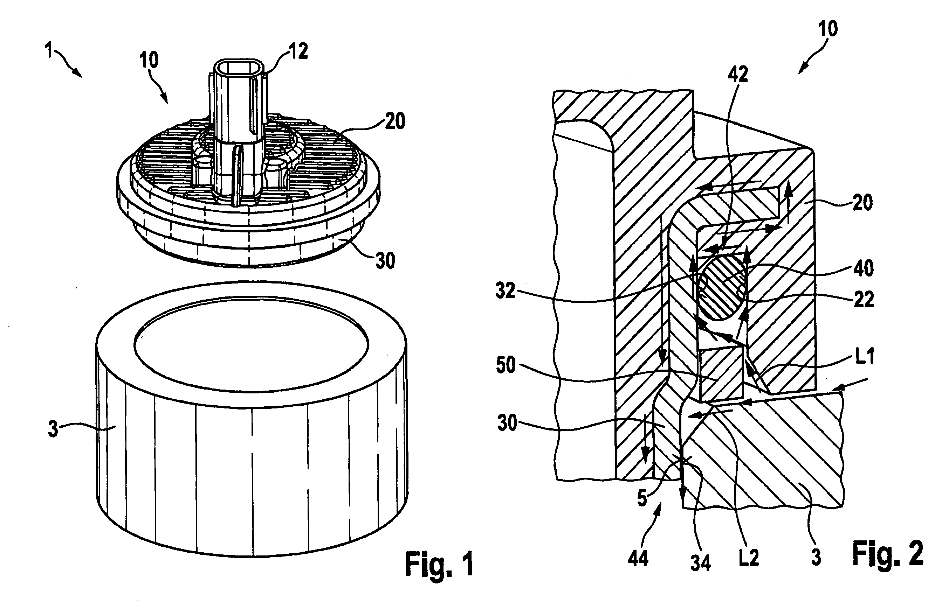

In Fig. 1 und 2 ist mit 3 ein ringförmiger äußerer ortsfester Teil eines Radlagers beschrieben, in welchem ein nicht dargestellter rotierender innerer Teil auf nicht dargestellten Kugeln abrollt. Der prinzipielle Aufbau eines Radlagers mit einer Vorrichtung zur Erfassung von Drehbewegungen des Radlagers für ein Fahrzeug ist dem Fachmann bekannt und wird beispielsweise in den eingangs genannten Dokumenten des Standes der Technik beschrieben, so dass hier nur auf die erfindungswesentlichen Komponenten der Vorrichtung zur Erfassung von Drehbewegungen eines Radlagers für ein Fahrzeug eingegangen wird. Mit dem rotierenden inneren Teil des Radlagers ist eine nicht dargestellte Signalgeberanordnung fest verbunden, welche Signale erzeugt, welche von mindestens einer in Fig. 1 und 2 nicht dargestellten ortsfesten Sensoreinheit zur Auswertung der Drehbewegung erfasst werden. Wie aus Fig. 1 und 2 ersichtlich ist, umfasst das dargestellte Ausführungsbeispiel der erfindungsgemäßen Vorrichtung 1 zur Erfassung von Drehbewegungen eines Radlagers für ein Fahrzeug ein erstes Ausführungsbeispiel einer Sensorbaugruppe 10 mit einem kappenförmigen Kunststoffteil 20, welches von einer Haltebuchse 30 getragen ist und das Radlager im montierten Zustand abdeckt. Wie aus Fig. 1 weiter ersichtlich ist, ist ein als Steckeraufnahme ausgeführtes Kontaktelement an das kappenförmige Kunststoffteil 20 angeformt, über welche die nicht dargestellte in das kappenförmige Kunststoffteil 20 integrierte Sensoreinheit mit Energie versorgt werden kann und die von der Sensoreinheit erfassten Signale an eine nachfolgende Auswerte- und/oder Steuereinheit übertragen werden können.

Wie aus Fig. 1 und 2 weiter ersichtlich ist, ist das kappenförmige Kunststoffteil 20 unter Ausbildung eines innenliegenden ersten Dichtbereichs 42 zumindest teilweise auf einen oberen Teil der Haltebuchse 30 aufgespritzt, wobei ein unterer Teil der Haltebuchse 30 in den ortsfesten Teil 3 des Radlagers einpressbar ausgeführt ist. In Fig. 2 bezeichnet L1 einen ersten Leckagepfad entlang der integrierten Haltebuchse 30 in die Kunststoffkappe 20 und somit auf indirektem Weg in das Innere des ortsfesten Teils 3 des Radlagers, und L2 bezeichnet einen zweiten Leckagepfad entlang der integrierten Haltebuchse 30 direkt in das Innere des ortsfesten Teils 3 des Radlagers.

Erfindungsgemäß ist zwischen dem kappenförmigen Kunststoffteil 20 und der Haltebuchse 30 im ersten Dichtbereich 42 zur Abdichtung des ersten Leckagepfads L1 ein elastisches Dicht- und Ausgleichselement 40 so eingepresst, dass das kappenförmige Kunststoffteil 20 in Verbindung mit dem Dicht- und Ausgleichselement 40 die Haltebuchse 30 am oberen Ende dicht abschließt. Das Dicht- und Ausgleichselement 40 ist so in den ersten Dichtbereich 42 eingeführt, dass das Dicht- und Ausgleichselement 40 zwischen einer ersten Dichtfläche 22 des kappenförmigen Kunststoffteils 20 und einer zweiten Dichtfläche 32 der Haltebuchse 30 radial verpresst ist. Wie aus Fig. 2 weiter ersichtlich ist, wird das Dicht- und Ausgleichselement 40 von einem als Haltering ausgeführten Halteelement 50 in dem als Aussparung ausgeführten ersten Dichtbereich 42 gehalten, wobei das Halteelement 50 in den ersten Dichtbereich 42 eingepresst ist.

Wie aus Fig. 2 weiter ersichtlich ist, ist die Haltebuchse 30 an einem zweiten Dichtbereich 44 zur Abdichtung des zweiten Leckagepfads L2 über eine beschichtete dritte Dichtfläche 34 mit einer vierten Dichtfläche 5 am ortsfesten Teil 3 des Radlagers verpresst. Die Abdichtung der Schnittstelle zwischen dem ortsfesten Teil 3 des Radlagers und der Haltebuchse 30 erfolgt mittels Kraftschluss (Presssitz) in Verbindung mit einer organischen Beschichtung, welche mittels KTL aufgebracht wird und Mikroleckagepfade im Pressverbund ausgleicht. Durch die Beschichtung der Haltebuchse 30, welche zumindest im Bereich der dritten Dichtfläche 34 erfolgt, kann die Dichtwirkung in vorteilhafter Weise verbessert werden.

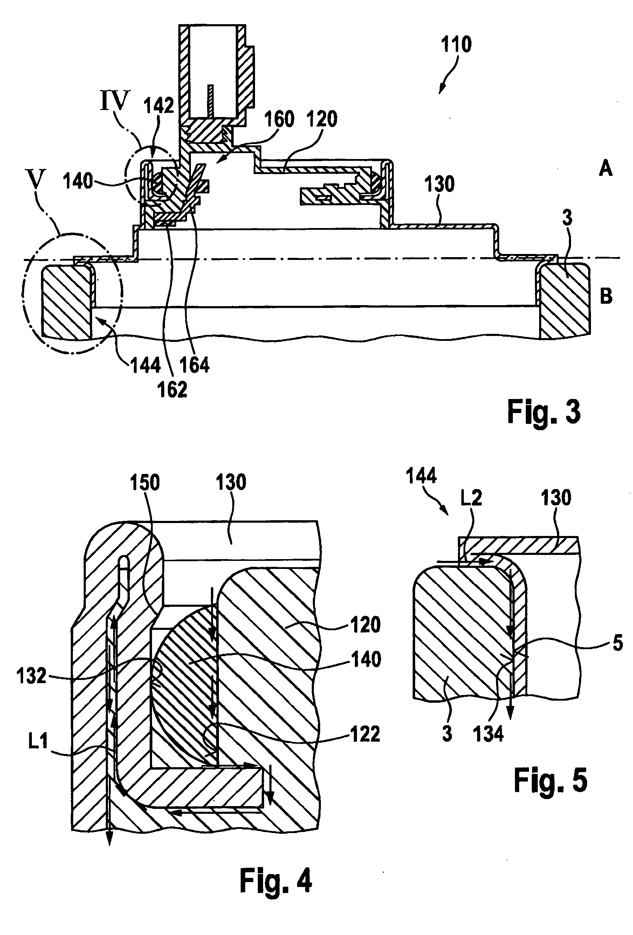

In Fig. 3 und 5 ist analog zum ersten Ausführungsbeispiel mit 3 ebenfalls der ringförmige äußere ortsfeste Teil eines Radlagers beschrieben, in welchem ein nicht dargestellter rotierender innerer Teil auf nicht dargestellten Kugeln abrollt. Mit dem rotierenden inneren Teil des Radlagers ist eine nicht dargestellte Signalgeberanordnung fest verbunden, welche Signale erzeugt, welche von einer ortsfesten Sensoreinheit 160 zur Auswertung der Drehbewegung erfasst werden.

Wie aus Fig. 3 weiter ersichtlich ist, umfasst das dargestellte zweite Ausführungsbeispiel einer Sensorbaugruppe 110 für eine Vorrichtung zur Erfassung von Drehbewegungen eines Radlagers für ein Fahrzeug analog zum ersten Ausführungsbeispiel ein kappenförmiges Kunststoffteil 120, welches von einer Haltebuchse 130 getragen ist und das Radlager im montierten Zustand abdeckt. An das kappenförmige Kunststoffteil 120 ist analog zum ersten Ausführungsbeispiel ein als Steckeraufnahme ausgeführtes Kontaktelement 112 angeformt. Wie aus Fig. 3 weiter ersichtlich ist, umfasst eine in das kappenförmige Kunststoffteil 120 integrierte Sensoreinheit 160 im dargestellten Ausführungsbeispiel ein Sensorelement 162 und eine Halterung 164 für das Sensorelement 162. Über das Kontaktelement 112 wird das Sensorelement 162 der Sensoreinheit 160 mit Energie versorgt. Zudem werden über das Kontaktelement 112 vom Sensorelement 162 zur Auswertung der Drehbewegung erfasste Signale an eine nachfolgende Auswerte- und/oder Steuereinheit übertragen, wobei die Signale von der nicht dargestellten mit dem rotierenden inneren Teil des Radlagers fest verbundenen Signalgeberanordnung erzeugt werden.

Wie aus Fig. 3 und 4 weiter ersichtlich ist, ist das kappenförmige Kunststoffteil 120 unter Ausbildung eines innenliegenden ersten Dichtbereichs 142 zumindest teilweise auf einen oberen Teil A der Haltebuchse 130 aufgespritzt, wobei ein unterer Teil B der Haltebuchse 130 in den ortsfesten Teil 3 des Radlagers eingepresst ist. In Fig. 4 bezeichnet L1 einen ersten Leckagepfad entlang der integrierten Haltebuchse 130 in die Kunststoffkappe 120 und somit auf indirektem Weg in das Innere des ortsfesten Teils 3 des Radlagers. In Fig. 5 bezeichnet L2 einen zweiten Leckagepfad entlang der integrierten Haltebuchse 130 direkt in das Innere des ortsfesten Teils 3 des Radlagers.

Erfindungsgemäß ist zwischen dem kappenförmigen Kunststoffteil 120 und der Haltebuchse 130 im ersten Dichtbereich 142 zur Abdichtung des ersten Leckagepfads L1 ein elastisches Dicht- und Ausgleichselement 140 so eingepresst, dass das kappenförmige Kunststoffteil 120 in Verbindung mit dem Dicht- und Ausgleichselement 140 die Haltebuchse 130 am oberen Ende dicht abschließt. Das Dicht- und Ausgleichselement 140 ist so in den ersten Dichtbereich 142 eingeführt, dass das Dicht- und Ausgleichselement 140 zwischen einer ersten Dichtfläche 122 des kappenförmigen Kunststoffteils 120 und einer zweiten Dichtfläche 132 der Haltebuchse 130 radial verpresst ist. Wie aus Fig. 4 weiter ersichtlich ist, wird das Dicht- und Ausgleichselement 140 von einem Halteelement 150 in dem als Aussparung ausgeführten ersten Dichtbereich 142 gehalten, wobei das Halteelement 150 als an die Haltebuchse 130 angeformte Kante ausgeführt ist, welche eine Verjüngung des ersten Dichtbereichs 142 bewirkt.

Im dargestellten zweiten Ausführungsbeispiel ist die Haltebuchse 130 mehrstufig, hier dreistufig, als Tiefziehteil ausgeführt, wobei das kappenförmige Kunststoffteil 120 so an eine erste Stufe der Haltebuchse 130 angespritzt ist, dass die Kunststoffkappe 120 außen von der Haltebuchse 130 vollständig umfasst ist und der erste Dichtbereich 142 ebenfalls innerhalb der Haltebuchse 130 zwischen einem umgeschlagenen Ende der Haltebuchse 130 und dem kappenförmigen Kunststoffteil 120 angeordnet ist. Wie aus Fig. 3 und 5 weiter ersichtlich ist, ist die Haltebuchse 130 an einem zweiten Dichtbereich 144 zur Abdichtung des zweiten Leckagepfads L2 über eine beschichtete dritte Dichtfläche 134 mit einer vierten Dichtfläche 5 am ortsfesten Teil 3 des Radlagers verpresst, wobei die dritte Dichtfläche 134 am oberen Ende von einem flanschartigen Überstand der dritten Stufe begrenzt ist. Die Abdichtung der Schnittstelle zwischen dem ortsfesten Teil 3 des Radlagers und der Haltebuchse 130 erfolgt ebenfalls mittels Kraftschluss (Presssitz) in Verbindung mit einer organischen Beschichtung, welche mittels KTL aufgebracht wird und Mikroleckagepfade im Pressverbund ausgleicht. Durch die Beschichtung der Haltebuchse 130, welche zumindest im Bereich der dritten Dichtfläche 134 erfolgt, kann die Dichtwirkung in vorteilhafter Weise verbessert werden. Der zweite Dichtbereich 144 ist an einer dritten Stufe am nach unten offenen Ende der Haltebuchse 130 angeordnet, so dass die beiden Leckagepfade L1, L2 räumlich getrennt voneinander verlaufen.

Im dargestellten zweiten Ausführungsbeispiel weist die Haltebuchse 130 oberhalb der Einpressfläche bzw. der dritten Dichtfläche 134 eine vorgegebene Geometrie auf, welche unabhängig vom jeweiligen Einbauort, d.h. von der Ausführungsform des Radlagers ist. Im Bereich der Einpressfläche bzw. der dritten Dichtfläche 134 kann die Haltebuchse 130 an den jeweiligen Einbauort, d.h. an die Ausführungsform des Radlagers angepasst werden. Das bedeutet, dass die Haltebuchse 130 an einem Ende eine nicht-variable Geometrie aufweist, wobei die Haltebuchse 130 an diesem Ende mit dem kappenförmigen Kunststoffteil 120 verbunden ist. Durch die variable Geometrie des unteren Teils der Haltebuchse 130, kann die Haltebuchse 130 optimal an die Einpressfläche bzw. die vierte Dichtfläche 5 des Radlagers angepasst werden, so dass in vorteilhafter Weise eine Modularität erreicht werden kann, welche auch bei unterschiedlicher Radlagergrößen, Radlagertypen, gleich ausgeführte Schnittstellen für das Dicht- und Ausgleichselement 140 ermöglichen. Dadurch kann der Aufwand für Werkzeuge zur Sensorkapselung, d.h. zur Umspritzung und/oder Positionierung der Sensoreinheit 160, und zur Herstellung der Haltebuchse 130 bei verschiedenen Radlagertypen mit einer Variation von Durchmesser, Höhe, Sensorposition, Einführfase in vorteilhafter Weise reduziert werden.

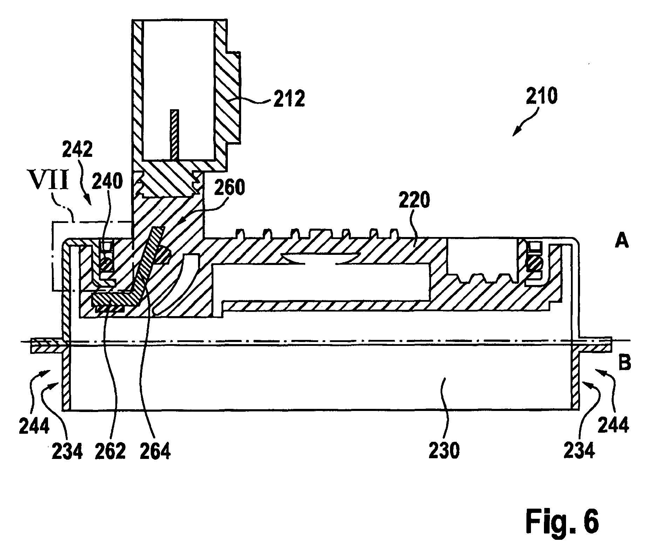

Wie aus Fig. 6 ersichtlich ist, umfasst das dargestellte dritte Ausführungsbeispiel einer Sensorbaugruppe 210 für eine Vorrichtung zur Erfassung von Drehbewegungen eines Radlagers für ein Fahrzeug ein kappenförmiges Kunststoffteil 220, welches von einer Haltebuchse 230 getragen ist und im eingebauten Zustand das hier nicht dargestellte Radlager abdeckt. An das kappenförmige Kunststoffteil 120 ist analog zum ersten und zweiten Ausführungsbeispiel ein als Steckeraufnahme ausgeführtes Kontaktelement 212 angeformt. Wie aus Fig. 6 weiter ersichtlich ist, umfasst eine in das kappenförmige Kunststoffteil 220 integrierte Sensoreinheit 260 analog zum zweiten Ausführungsbeispiel ein Sensorelement 262 und eine Halterung 264 für das Sensorelement 262. Über das Kontaktelement 212 wird das Sensorelement 262 der Sensoreinheit 260 mit Energie versorgt. Zudem werden über das Kontaktelement 212 vom Sensorelement 262 zur Auswertung der Drehbewegung erfasste Signale an eine nachfolgende Auswerte- und/oder Steuereinheit übertragen, wobei die Signale von der nicht dargestellten mit dem rotierenden inneren Teil des Radlagers fest verbundenen Signalgeberanordnung erzeugt werden.

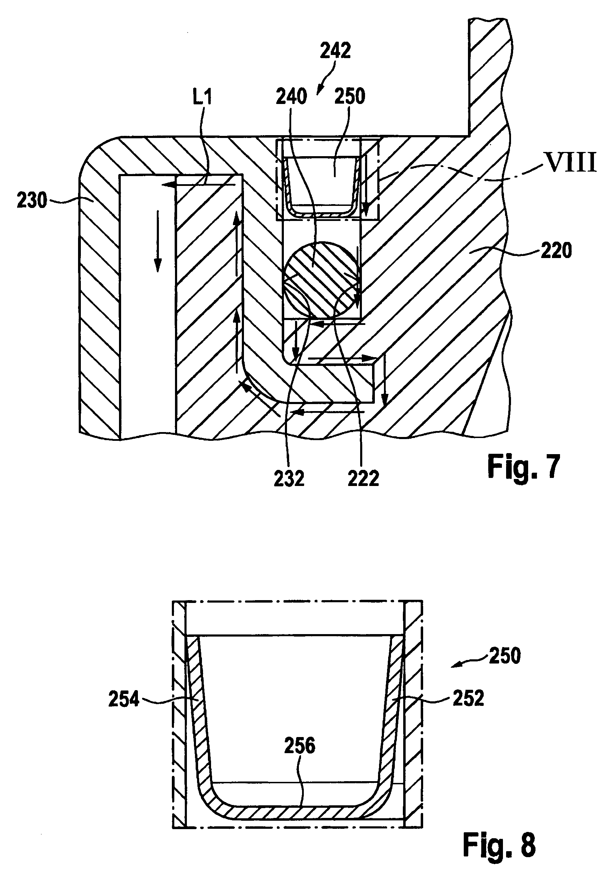

Wie aus Fig. 6 und 7 weiter ersichtlich ist, ist das kappenförmige Kunststoffteil 220 unter Ausbildung eines innenliegenden ersten Dichtbereichs 242 zumindest teilweise auf einen oberen Teil der Haltebuchse 230 aufgespritzt, wobei ein unterer Teil der Haltebuchse 230 in den ortsfesten Teil 3 des Radlagers einpressbar ausgeführt ist. In Fig. 7 bezeichnet L1 den ersten Leckagepfad entlang der integrierten Haltebuchse 230 in die Kunststoffkappe 220 und somit auf indirektem Weg in das Innere des ortsfesten Teils 3 des Radlagers. Der zweite Leckagepfad verläuft analog zum zweiten Ausführungsbeispiel entlang des integrierten Halterings 230 direkt in das Innere des ortsfesten Teils 3 des Radlagers.

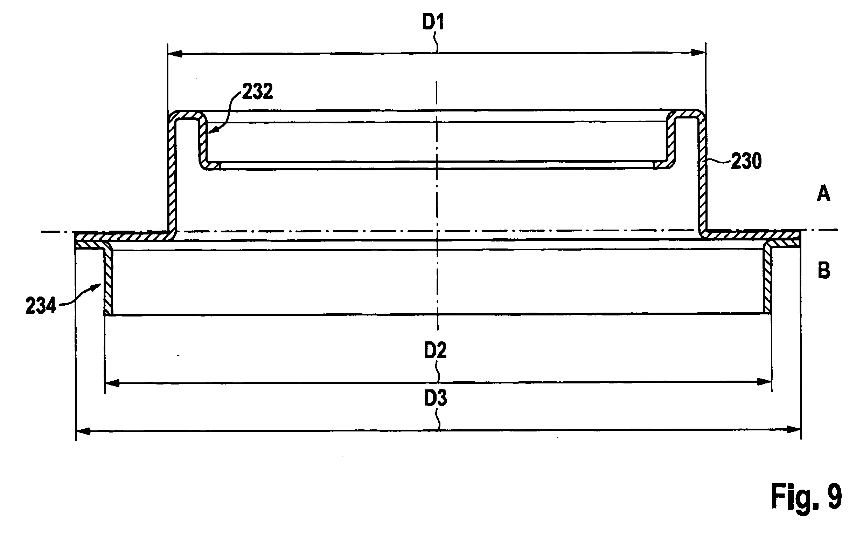

Erfindungsgemäß ist zwischen dem kappenförmigen Kunststoffteil 220 und der Haltebuchse 230 im ersten Dichtbereich 242 zur Abdichtung des ersten Leckagepfads L1 ein elastisches Dicht- und Ausgleichselement 240 so eingepresst, dass das kappenförmige Kunststoffteil 220 in Verbindung mit dem Dicht- und Ausgleichselement 240 die Haltebuchse 230 am oberen Ende dicht abschließt. Das Dicht- und Ausgleichselement 240 ist so in den ersten Dichtbereich 242 eingeführt, dass das Dicht- und Ausgleichselement 240 zwischen einer ersten Dichtfläche 222 des kappenförmigen Kunststoffteils 220 und einer zweiten Dichtfläche 232 der Haltebuchse 230 radial verpresst ist. Wie aus Fig. 7 weiter ersichtlich ist, wird das Dicht- und Ausgleichselement 240 von einem als Haltering ausgeführten Halteelement 250 in dem als Aussparung ausgeführten ersten Dichtbereich 242 gehalten, wobei das Halteelement 250 in den ersten Dichtbereich 242 eingepresst ist. Wie aus Fig. 8 ersichtlich ist, ist das Halteelement 250 als oben offenes U-Profil ausgeführt, wobei die Seitenwände 252, 254 so ausgeführt sind, dass sich das U-Profil ausgehend vom Boden 256 aufweitet, um einen optimalen Sitz des Halteelements 250 im ersten Dichtbereich 242 zu gewährleisten. Analog zum zweiten Ausführungsbeispiel ist die Haltebuchse 230 auch im dritten Ausführungsbeispiel mehrstufig, hier zweistufig, als Tiefziehteil ausgeführt, wobei das kappenförmige Kunststoffteil 220 so an einer ersten Stufe der Haltebuchse 230 angespritzt ist, dass die Kunststoffkappe 220 außen von der Haltebuchse 230 vollständig umfasst ist und der erste Dichtbereich 242 ebenfalls innerhalb der Haltebuchse 230 zwischen einem umgeschlagenen Ende der Haltebuchse 230 und dem kappenförmigen Kunststoffteil 220 angeordnet ist. Wie aus Fig. 6 und 9 weiter ersichtlich ist, kann die Haltebuchse 230 an einem zweiten Dichtbereich 244 zur Abdichtung des hier nicht dargestellten zweiten Leckagepfads L2 über eine beschichtete dritte Dichtfläche 234 mit einer vierten Dichtfläche 5 am ortsfesten Teil 3 des Radlagers verpresst werden, wobei die dritte Dichtfläche 234 am oberen Ende von einem flanschartigen Überstand einer zweiten Stufe begrenzt ist. Die Abdichtung der Schnittstelle zwischen dem ortsfesten Teil 3 des Radlagers und der Haltebuchse 230 erfolgt analog zum zweiten Ausführungsbeispiel ebenfalls mittels Kraftschluss (Presssitz) in Verbindung mit einer organischen Beschichtung, welche mittels KTL aufgebracht wird und Mikroleckagepfade im Pressverbund ausgleicht. Durch die Beschichtung der Haltebuchse 230, welche zumindest im Bereich der dritten Dichtfläche 234 erfolgt, kann die Dichtwirkung in vorteilhafter Weise verbessert werden. Der zweite Dichtbereich 244 ist an der zweiten Stufe am nach unten offenen Ende der Haltebuchse 230 angeordnet, so dass die beiden Leckagepfade L1, L2 auch hier räumlich getrennt voneinander verlaufen.

Im dargestellten dritten Ausführungsbeispiel weist die Haltebuchse 230 oberhalb der Einpressfläche bzw. der dritten Dichtfläche 234 eine vorgegebene Geometrie auf, welche unabhängig vom jeweiligen Einbauort, d.h. von der Ausführungsform des Radlagers ist. Im Bereich der der Einpressfläche bzw. der dritten Dichtfläche 234 kann die Haltebuchse 230 an den jeweiligen Einbauort, d.h. an die Ausführungsform des Radlagers angepasst werden. Das bedeutet, dass die Haltebuchse 230 an einem Ende eine nicht-variable Geometrie mit einem gleichbleibenden Durchmesser D1 aufweist, wobei die Haltebuchse 230 an diesem Ende mit dem kappenförmigen Kunststoffteil 220 verbunden ist. Durch die variable Geometrie des unteren Teils der Haltebuchse 230, kann die Haltebuchse 230 optimal an die Einpressfläche bzw. die vierte Dichtfläche 5 des Radlagers angepasst werden, so dass in vorteilhafter Weise eine Modularität erreicht werden kann, welche auch bei unterschiedlicher Radlagergrößen, Radlagertypen, eine gleich ausgeführte Schnittstelle für das Dicht- und Ausgleichselement 240 ermöglichen. Dadurch kann der Aufwand für Werkzeuge zur Sensorkapselung, d.h. zur Umspritzung und/oder Positionierung der Sensoreinheit 260, und zur Herstellung der Haltebuchse 230 bei verschiedenen Radlagertypen mit einer Variation von Durchmesser, Höhe, Sensorposition, Einführfase in vorteilhafter Weise reduziert werden. Das bedeutet, dass die Durchmesser D2 und D3 der Haltebuchse 230 in Abhängigkeit vom korrespondierenden Radlager ausgeführt werden.

Vorzugsweise ist die Haltebuchse 30, 130, 230 zumindest im Bereich der dritten Dichtfläche 34, 134, 234 mit einer CEF-Schicht beschichtet, welche eine Dicke im Bereich von ungefähr 20 bis 30µm aufweist.

Das Dicht- und Ausgleichselement 40, 140, 240 kann beispielsweise als O-Ringdichtung oder D-Ringdichtung aus HNBR-Material ausgeführt werden. Alternativ zu den beschriebenen Ausführungsformen kann das Dicht- und Ausgleichselement 40, 140, 240 als selbsthaltendes Bauteil, beispielsweise als Lamellendichtung ausgeführt werden. In diesem Fall kann dann auf das Haltelement verzichtet werden.

Die vorliegende Erfindung kompensiert mit dem innen im Verbund liegenden Dicht- und Ausgleichselement die Ausdehnungsunterschiede zwischen Metall und Kunststoff und stellt auch gleichzeitig die Dichtfunktion zwischen den Metall- und Kunststoffteilen der Sensorbaugruppe sicher. Die Verpressung erfolgt in radialer Richtung was den Einfluss der unterschiedlichen thermischen Ausdehnungen aufgrund der Bauteilanordnung reduziert.

## Patentansprüche

1. Sensorbaugruppe für ein Fahrzeug mit mindestens einer Sensoreinheit (160, 260), welche in einem kappenförmigen Kunststoffteil (20, 120,220) angeordnet ist, wobei das kappenförmige Kunststoffteil (20, 120, 220) von einer Haltebuchse (30, 130, 230) getragen ist und diese an einem Ende abschließt, wobei zwischen dem kappenförmigen Kunststoffteil (20, 120, 220) und der Haltebuchse (30, 130, 230) in einem ersten Dichtbereich (42, 142, 242) zur Abdichtung eines ersten Leckagepfads (L1) ein elastisches Dicht- und Ausgleichselement (40, 140, 240) eingepresst ist, so dass das kappenförmige Kunststoffteil (20, 120, 220) in Verbindung mit dem Dicht- und Ausgleichselement (40, 140, 240) die Haltebuchse (30, 130, 230) an einem Ende dicht abschließt, wobei der erste Dichtbereich (42, 142, 242) als offene Aussparung ausgeführt ist, **dadurch gekennzeichnet, dass** das Dicht- und Ausgleichselement (40, 140, 240) so in den ersten Dichtbereich (42, 142, 242) eingeführt ist, dass das Dicht- und Ausgleichselement (40, 140, 240) zwischen einer ersten Dichtfläche (22, 122, 222) des kappenförmigen Kunststoffteils (20, 120, 220) und einer zweiten Dichtfläche (32, 132, 232) der Haltebuchse (30, 130, 230) radial verpresst ist, und, dass das Dicht- und Ausgleichselement (40, 140, 240) von einem Halteelement (50, 150, 250) im ersten Dichtbereich (42, 142, 242) gehalten wird.

2. Sensorbaugruppe nach Anspruch 1, **dadurch gekennzeichnet, dass** die Haltebuchse (30, 130, 230) zumindest im Bereich einer dritten Dichtfläche (34, 134, 234) mit einer KTL-Schicht (CEF-Schicht) beschichtet ist, welche eine Dicke im Bereich von ungefähr 20 bis 30µm aufweist.

3. Sensorbaugruppe nach Anspruch 1 oder 2, **dadurch gekennzeichnet, dass** das kappenförmige Kunststoffteil (20, 120, 220) unter Ausbildung des ersten Dichtbereichs (42, 142, 242) zumindest teilweise auf einen ersten Teil (A) der Haltebuchse (30, 130, 230) aufgespritzt ist.

4. Sensorbaugruppe nach einem der Ansprüche 1 bis 3, **dadurch gekennzeichnet dass** die Sensoreinheit (160, 260) in das kappenförmige Kunststoffteil (20, 120, 220) integriert ist.

5. Sensorbaugruppe nach einem der Ansprüche 1 bis 4. **dadurch gekennzeichnet, dass** das Dicht- und Ausgleichselement (40, 140, 240) als O-Ringdichtung oder D-Ringdichtung aus HNBR-Material ausgeführt ist.

6. Vorrichtung zur Erfassung von Drehbewegungen eines Radlagers für ein Fahrzeug mit einem Radlager (3) mindestens einem Signalgeber an einem rotierenden Teil des Radlagers und einer ortsfesten Sensorbaugruppe (10, 110, 210) mit mindestens einer Sensoreinheit (160, 260), welche in einem kappenförmigen Kunststoffteil (20, 120, 220) angeordnet ist, wobei das kappenförmige Kunststoffteil (20, 120, 220) von einer Haltebuchse (30, 130, 230) getragen ist und das Radlager (3) abdeckt, **dadurch gekennzeichnet, dass** die Sensorbaugruppe (10) nach einem der Ansprüche 1 bis 5 ausgeführt ist.

7. Vorrichtung nach einem Anspruch 6, **dadurch gekennzeichnet, dass** die Haltebuchse (30, 130, 230) an einem zweiten Dichtbereich (44,144, 244) zur Abdichtung eines zweiten Leckagepfads (L2) über die beschichtete dritte Dichtfläche (34, 134, 234) mit einer vierten Dichtfläche (5) am ortsfesten Teil (3) des Radlagers verpresst ist.

8. Vorrichtung nach Anspruch 7, **dadurch gekennzeichnet, dass** die Haltebuchse (30, 130, 230) einen ersten Teil (A), dessen Geometrie unabhängig vom Radlager (3) ist, und einen zweiten Teil (B) aufweist, dessen Geometrie an die Einpressfläche des Radlagers (3) angepasst ist.

## Claims

1. Sensor subassembly for a vehicle with at least one sensor unit (160, 260) which is arranged in a cap-shaped plastic part (20, 120, 220), wherein the cap-shaped plastic part (20, 120, 220) is carried by a retaining bush (30, 130, 230) and seals this at one end, wherein between the cap-shaped plastic part (20, 120, 220) and the retaining bush (30, 130, 230) in a first sealing region (42, 142, 242), to seal a first leakage path (L1), a resilient sealing and compensating element (40, 140, 240) is pressed in such that the cap-shaped plastic part (20, 120, 220) in conjunction with the sealing and compensating element (40, 140, 240) tightly seals the retaining bush (30, 130, 230) at one end, wherein the first sealing region (42, 142, 242) is designed as an open recess, **characterized in that** the sealing and compensating element (40, 140, 240) is inserted in the first sealing region (42, 142, 242) such that the sealing and compensating element (40, 140, 240) is radially compressed between a first sealing surface (22, 122, 222) of the cap-shaped plastic part (20, 120, 220) and a second sealing surface (32, 132, 232) of the retaining bush (30, 130, 230), and that the sealing and compensating element (40, 140, 240) is held by a retaining element (50, 150, 250) in the first sealing region (42, 142, 242).

2. Sensor subassembly according to Claim 1, **characterized in that** the retaining bush (30, 130, 230) at least in the region of a third sealing surface (34, 134, 234) is coated with a cathodic dip coating (CEF coating) which has a thickness in the range of around 20 to 30 µm.

3. Sensor subassembly according to Claim 1 or 2, **characterized in that** the cap-shaped plastic part (20, 120, 220) is injection-molded at least partly onto a first part (A) of the retaining bush (30, 130, 230) to form the first sealing region (42, 142, 242).

4. Sensor subassembly according to any of Claims 1 to 3, **characterized in that** the sensor unit (160, 260) is integrated into the cap-shaped plastic part (20, 120, 220).

5. Sensor subassembly according to any of Claims 1 to 4, **characterized in that** the sealing and compensating element (40, 140, 240) is designed as an O-ring seal or D-ring seal of HNBR material.

6. Device for measuring rotational movements of a wheel bearing for a vehicle with a wheel bearing (3), at least one signal emitter on a rotating part of the wheel bearing and one stationary sensor subassembly (10, 110, 210) with at least one sensor unit (160, 260) which is arranged in a cap-shaped plastic part (20, 120, 220), wherein the cap-shaped plastic part (20, 120, 220) is carried by a retaining bush (30, 130, 230) and covers the wheel bearing (3), **characterized in that** the sensor subassembly (10) is designed according to any of Claims 1 to 5.

7. Device according to Claim 6, **characterized in that** the retaining bush (30, 130, 230) at a second sealing region (44, 144, 244), to seal a second leakage path (L2), is compressed via the coated third sealing surface (34, 134, 234) with a fourth sealing surface (5) on the stationary part (3) of the wheel bearing.

8. Device according to Claim 7, **characterized in that** the retaining bush (30, 130, 230) comprises a first part (A), the geometry of which is independent of the wheel bearing (3), and a second part (B), the geometry of which is adapted to the press-in surface of the wheel bearing (3).

## Revendications

1. Sous-ensemble détecteur pour un véhicule comprenant au moins une unité de détection (160, 260) qui est disposée dans une pièce en matière plastique (20, 120, 220) en forme de capot, la pièce en matière plastique (20, 120, 220) en forme de capot étant supportée par une douille de maintien (30, 130, 230) et fermant celle-ci à une extrémité, un élément d'étanchéité et de compensation (40, 140, 240) élastique étant enfoncé entre la pièce en matière plastique (20, 120, 220) en forme de capot et la douille de maintien (30, 130, 230) dans une première zone d'étanchéité (42, 142, 242) pour rendre étanche un premier trajet de fuite (L1), de sorte que la pièce en matière plastique (20, 120, 220) en forme de capot, en association avec l'élément d'étanchéité et de compensation (40, 140, 240), ferme la douille de maintien (30, 130, 230) de manière étanche à une extrémité, la première zone d'étanchéité (42, 142, 242) étant réalisée sous la forme d'une cavité ouverte, **caractérisé en ce que** l'élément d'étanchéité et de compensation (40, 140, 240) est introduit dans la première zone d'étanchéité (42, 142, 242) de telle sorte que l'élément d'étanchéité et de compensation (40, 140, 240) est comprimé dans le sens radial entre une première surface d'étanchéité (22, 122, 222) de la pièce en matière plastique (20, 120, 220) en forme de capot et une deuxième surface d'étanchéité (32, 132, 232) de la douille de maintien (30, 130, 230), et **en ce que** l'élément d'étanchéité et de compensation (40, 140, 240) est maintenu par un élément de maintien (50, 150, 250) dans la première zone d'étanchéité (42, 142, 242).

2. Sous-ensemble détecteur selon la revendication 1, **caractérisé en ce que** la douille de maintien (30, 130, 230) est revêtue dans la zone d'une troisième surface d'étanchéité (34, 134, 234) d'une couche de peinture par immersion cathodique (couche CEF), laquelle possède une épaisseur dans la plage approximativement de 20 à 30 µm.

3. Sous-ensemble détecteur selon la revendication 1 ou 2, **caractérisé en ce que** la pièce en matière plastique (20, 120, 220) en forme de capot est au moins partiellement appliquée par projection sur une première partie (A) de la douille de maintien (30, 130, 230) en formant la première zone d'étanchéité (42, 142, 242).

4. Sous-ensemble détecteur selon l'une des revendications 1 à 3, **caractérisé en ce que** l'unité de détection (160, 260) est intégrée dans la pièce en matière plastique (20, 120, 220) en forme de capot.

5. Sous-ensemble détecteur selon l'une des revendications 1 à 4, **caractérisé en ce que** l'élément d'étanchéité et de compensation (40, 140, 240) est réalisé sous la forme d'un joint torique ou d'un joint à méplat en HNBR.

6. Dispositif de détection des mouvements de rotation d'un palier de roue pour un véhicule, comprenant un palier de roue (3), au moins un codeur de signal sur une partie en rotation du palier de roue et un sous-ensemble détecteur (10, 110, 210) en position fixe, lequel comprend au moins une unité de détection (160, 260) qui est disposée dans une pièce en matière plastique (20, 120, 220) en forme de capot, la pièce en matière plastique (20, 120, 220) en forme de capot étant supportée par une douille de maintien (30, 130, 230) et recouvrant le palier de roue (3), **caractérisé en ce que** le sous-ensemble détecteur (10) est exécuté selon l'une des revendications 1 à 5.

7. Dispositif selon la revendication 6, **caractérisé en ce que** la douille de maintien (30, 130, 230) est comprimée au niveau d'une deuxième zone d'étanchéité (44, 144, 244) en vue de rendre étanche un deuxième trajet de fuite (L2) par le biais de la troisième surface d'étanchéité (34, 134, 234) enduite avec une quatrième surface d'étanchéité (5) sur la partie en position fixe (3) du palier de roue.

8. Dispositif selon la revendication 7, **caractérisé en ce que** la douille de maintien (30, 130, 230) possède une première partie (A), dont la forme géométrique est indépendante du palier de roue (3), et une deuxième partie (B), dont la forme géométrique est adaptée à la surface d'enfoncement du palier de roue (3).
